# EUROPÄISCHE PATENTSCHRIFT

(11) **EP 0 943 278 B1**
(45) Veröffentlichungstag und Bekanntmachung des Hinweises auf die Patenterteilung: **21.02.2001**
(21) Anmeldenummer: 99105235.8
(22) Anmeldetag: 13.03.1999
(51) Int. Cl.: A47J 43/07

(54) **Küchengerät**
Kitchen apparatus
Appareil de cuisine

(30) Priorität: 20.03.1998 DE 19812355
(43) Veröffentlichungstag der Anmeldung: 22.09.1999
(73) Patentinhaber: Braun GmbH, Frankfurt am Main (DE)
(72) Erfinder: Ring, Martin, Dr., 61479 Glashütten (DE)

(56) Entgegenhaltungen:
- DE-B- 1 153 287
- FR-A- 2 364 013

## Beschreibung

Küchengerät zum schneidenden Zerkleinern von Nahrungsmitteln, wie Obst, Gemüse oder dergleichen, mit einem in einer Halterung angebrachten Schneidmesser, das zwei Schneiden aufweist, deren Schneidkanten im wesentlichen in einer gemeinsamen Schneidebene verlaufen und unter einem Winkel zueinander angeordnet sind, wobei das Schneidmesser in einer Scheibe ausgebildet ist, die um eine senkrecht zu der Schneidebene angeordnete Drehachse rotiert.

Derartige Küchengeräte, mit denen Nahrungsmittel bearbeitet werden, sind allgemein bekannt. Dabei handelt es sich um handbetätigte Geräte. Ein wesentliches Bauteil dieser Küchengeräte sind Messer oder Arbeitsscheiben zum Schneiden, Raspeln, Reiben und Stifteln von Nahrungsmitteln. Diese Scheiben sind, dem Bearbeitungsziel entsprechend, profiliert. Um Nahrungsmittel, wie beispielsweise Obst oder Gemüse, in Scheiben zu zerkleinern, werden Arbeitsscheiben eingesetzt, die zu Schneidmessern ausgebildete Schneidkanten aufweisen. Unter Bewegung der Schneidscheibe werden von den darauf aufliegenden Gemüsestücken beispielsweise streifen- oder scheibenförmige Teile bei Hin- und Herbewegen des Gemüses abgeschnitten, die dann in einen Behälter, der darunter steht, fallen.

Ein handbetätigtes Gerät zum Zerkleinern von Nahrungsmitteln, das beispielsweise als Gemüsehobel oder Gemüseschneider einsetzbar ist, ist in der EP-B1 0 663 174 beschrieben. Dieses Küchengerät ist aus einer unteren Führungsplatte und einer sich daran anschließenden oberen Führungsplatte aufgebaut. Die obere Führungsplatte besitzt an ihrer Vorderkante ein mit ihrer Ebene fluchtendes, horizontales Schneidmesser. In der unteren Führungsplatte sind mehrere, senkrecht zu ihrer Ebene verlaufende, vertikale Schneidmesser vorgesehen, die aus einzelnen Blechstreifen gebildet sind. Die untere Führungsplatte ist in seitlichen Rahmenteilen der oberen Führungsplatte verschiebbar gehalten, so daß, entsprechend dem Abstand der beiden Führungsplatten, unter einer Hin- und Herbewegung der unteren Führungsplatte in den Führungen der oberen Führungsplatte von den darauf aufliegenden Nahrungsmittel-Stücken einzelne Scheiben durch das Schneidmesser abgetrennt werden. Die horizontalen Schneidmesser sind darüberhinaus V-förmig ausgestaltet, so daß das zu schneidene Gut durch die beiden Schneidkanten von zwei Seiten aus gleichzeitig eingeschnitten wird. Mit einem weiteren Verschieben der V-förmigen Schneidkanten zu dem zu zerkleinernden Nahrungsmittel hin dringen diese in das Nahrungsmittel ein, bis sich die beiden Schnitte vereinigen und von dieser Seite das Nahrungsmittelstück zu der gegenüberliegenden Seite hin durchtrennen.

Solche Küchengeräte zum schneidenden Zerkleinern von Nahrungsmitteln haben sich grundsätzlich im täglichen Einsatz bewährt. Es hat sich allerdings gezeigt, daß, auch in Abhängigkeit von der Konsistenz des Nahrungsmittels, das Nahrungsmittel nicht in der Endphase des Schneidvorgangs glatt durch die Schneidkanten durchtrennt wird, sondern im Gegensatz dazu abreißt, so daß eine Bruchstelle auftritt. Dieses Abreißen oder Abbrechen der einzelnen Scheiben tritt zunehmend dann auf, wenn die Schneidkanten über längeren Gebrauch des Küchengeräts stumpf werden, d.h. wenn die Schneidwirkung nachläßt. Während harte oder feste Güter diese abgerissenen Randbereiche zeigen, sind mit solchen Schneideinrichtungen sehr harte und sehr feste Güter nur schwer zu zerkleinern und neigen dazu, die Schneidvorrichtung zu blockieren, während sehr weiche Güter, wie beispielsweise Tomaten oder auch bestimmte Salatsorten, schlecht oder überhaupt nicht zu schneiden sind.

Elektrische Küchengeräte, die Arbeitsscheiben zum Schneiden einsetzen, besitzen üblicherweise eine Schneidkante, die sich etwa radial, von der Drehachse der Scheibe aus gesehen, quer über die Scheibenfläche erstrecken, gegebenenfalls geringfügig gebogen. Dies zeigen insbesondere die von der Anmelderin selbst vertriebenen Küchenmaschinen "Braun Multisystem K 1000" und "Braun CombiMax 650". Auch bei diesen Schneidscheiben mit einer so ausgebildeten Schneidkante ist das Problem gegeben, daß das zu zerkleinernde Gut von einer Seite zur gegenüberliegenden Seite hin durchtrennt wird mit der damit verbundenen Problematik, daß das abzutrennende Teil in der Endphase des Schneidvorgangs abgerissen wird.

Aus der DE-B-1153287 ist ein Küchengerät zum schneidenden Zerkleinern von Nahrungsmitteln der eingangs beschriebenen Art bekannt. Auch hier tritt das zuletzt angegebene Problem auf, nämlich daß das zu zerschneidende Gut von einer Seite zur gegenüberliegenden Seite hin durchtrennt und dadurch das abzutrennende Teil ebenfalls in der Endphase des Schneidvorganges abgerissen wird.

Ausgehend von dem vorstehend beschriebenen Stand der Technik liegt der vorliegenden Erfindung nun die Aufgabe zugrunde, ein Küchengerät der eingangs angegebenen Art derart auszubilden, das im Vergleich zu dem bekannten Küchengerät Nahrungsmittel so zerkleinert, daß das abzutrennende Teil praktisch vollständig durchschnitten wird, ohne daß ein Abreißen in der Endphase des Schneidvorgangs auftritt und dadurch abgerissene Randbereiche entstehen.

Gelöst wird diese Aufgabe durch die Merkmale des Anspruchs 1.

Durch die Anordnung der beiden Schneiden unter einem Winkel einerseits und durch die Ausbildung des Schneidmessers in einer um eine Drehachse rotierenden Scheibe andererseits wird erreicht, daß dann, wenn das Schneidgut zugeführt wird und die Schneidscheibe rotiert, das Gut von zwei Seiten, in radialer Richtung von der Drehachse aus nach außen und von radial außen zur Drehachse hin, geschnitten wird. Der eine Schnitt erfolgt, unter Rotieren der Scheibe, durch die außenliegende Schneide von außen nach innen, d.h. von der radial außenliegenden Seite des Schneidguts in Richtung zu der Drehachse hin, während die andere Schneide, d.h. die näher zu der Drehachse hin liegende Schneide, das Gut von innen in der Richtung radial nach außen einschneidet. Aufgrund der Drehung der Scheibe werden die beiden Schneiden in ihrer Orientierung relativ zu dem Schneidgut fortlaufend verändert, so daß schließlich ein scharfes Durchtrennen bzw. glattes Abschneiden eines scheibenförmigen Stücks von dem Schneidgut erfolgt. Die abgeschnittene Scheibe fällt nach unten, das zu schneidende Gut rutscht nach, so daß mit der nächsten Umdrehung der Scheibe eine weitere Scheibe abgeschnitten werden kann. Während des Schneidvorgangs ist aufgrund der beiden Schnitte gewährleistet, daß das Schneidgut ständig zentriert und fixiert wird.

Um die vorstehend beschriebene Schneidwirkung zu optimieren, insbesondere im Hinblick darauf, daß das zu schneidende Gut, in radialer Richtung der Drehachse gesehen, von außen und von innen so geschnitten wird, daß ein glattes Abtrennen der jeweiligen Scheiben mit jeder Umdrehung der Scheiben erfolgt, werden die Merkmale gemäß Anspruch 2 bevorzugt. Durch die Krümmungsformen der beiden Schneiden, die in einem Punkt an ihren Enden zusammenlaufen, erfolgt eine Art sichelförmiger Schnitt durch die äußere, konvex gekrümmte Schneide, während ein zweiter, sichelförmiger Schnitt von der Innenseite durch die näher zu der Drehachse hin liegende konkav gekrümmte Schneide erfolgt. Aufgrund der jeweiligen Krümmungen der Schneiden und deren Anordnung in der Drehscheibe ergibt sich eine Relativbewegung der Schneiden zu dem Schneidgut mit einer Schneidgeschwindigkeit, die sich bei gleichbleibender Drehgeschwindigkeit der Scheibe ändert. Auch hierbei wird das Schneidgut zwischen den beiden Schneiden zentriert.

Die Schneidkanten können an Stegen in der Scheibe ausgebildet werden. Bevorzugt werden sie jedoch, gemäß Anspruch 3, an den Kanten eines Durchbruchs in der Scheibe gebildet, wodurch sich ein stabiler Aufbau ergibt. Gleichzeitig kann die Fläche der Scheibe als Auflage für das Schneidgut dienen, so daß unter einer entsprechenden Veränderung der Steigung der Scheibenfläche, in Richtung der Drehachse der Scheibe gesehen, die Schneiddicke für die von dem Schneidgut abzutrennende Scheibe einstellbar ist. Diejenige Kante des Durchbruchs, die der Schneidkante gegenüberliegt, ist somit entsprechend tieferliegend ausgebildet, so daß der Abstand dieser tieferliegenden Kante zu der Schneidkante, in Richtung der Drehachse gesehen, die Dicke der abzuschneidenden Scheibe bestimmt. Nachdem eine Scheibe von dem Schneidgut abgeschnitten ist, ruht die Schnittfläche des verbleibenden Schneidguts auf der Scheibenfläche und senkt sich unter Drehung der Scheibe auf das tieferliegende Niveau ab, so daß nach einer Umdrehung die Schneidkanten des Schneidmessers das Schneidgut entsprechend der Dicke der abzutrennenden Scheibe erfassen, zentrieren und von beiden Seiten, d.h. im wesentlichen von der radial außenliegenden Seite der radial innenliegenden Seite, durchtrennen.

Die beiden Schneidkanten können so ausgeführt werden, daß sich deren Schnitte beim Drehen der Scheibe überlagern. Bevorzugt werden allerdings die beiden Schneidkanten so positioniert, daß sie an einem Ende aneinander anschließen (Anspruch 4), so daß die eine Schneidkante fortlaufend in die andere Schneidkante übergeht.

Gemäß Anspruch 5 kann unterhalb der Schneidebene eine Schneidgutauflage angeordnet werden, deren Abstand zu der Schneidebene die Dicke der jeweils abzuschneidenden Scheibe von dem darauf aufliegenden Nahrungsmittel bestimmt.

Um die Schneiddicke den jeweiligen Anforderungen anpassen zu können, sollte der Abstand nach einer Weiterbildung der Erfindung zwischen Schneidgutauflage und Schneidgutebene, gemäß Anspruch 6, veränderbar sein. Eine solche Veränderung des Abstands kann in einfacher Weise dadurch erfolgen, daß Einsatz- oder Zwischenteile, gemäß Anspruch 7, verwendet werden. Falls diese Einsatz- oder Zwischenteile als ringförmige Teile ausgeführt (Anspruch 8) sind, können diese unmittelbar um die Drehachse herum angeordnet werden, um so den Abstand zwischen der Schneidgutauflage und der Schneidebene, d.h. die Ebene, in der die Schneiden angeordnet sind, zu verändern.

Wie bereits weiter vorstehend ausgeführt ist, ist es als bevorzugt anzusehen, die Scheibe, in der das Schneidmesser ausgeführt ist, auch als Schneidgutauflage auszubilden (Anspruch 9). Hierzu wird derjenige Bereich der Scheibe, bevorzugt im Bereich einer entsprechenden Durchbrechung der Scheibe, der dem Schneidmesser voranführt, als Schneidgutauflage verwendet. Durch Verbiegen oder Verwölben der Scheibe so, daß sich in Richtung der Drehachse gesehen ein spiralförmiger Verlauf der Scheibe ergibt, kann der Abstand zwischen der Schneidauflage und den Schneidkanten verändert werden. Mit einer entsprechenden Einstellvorrichtung, beispielsweise in Form einer Gewindestange und einer doppelten Lagerung der Scheibe an dieser Gewindestange, kann die Scheibe, in sich verwölbt oder verbogen, in den unterschiedlichen Stellungen fixiert werden (Anspruch 10), um so den Abstand zwischen der Ebene der Schneidgutauflage und der Ebene der Schneidkanten einzustellen. Die Fläche der Scheibe ist hierbei membranartig nachgebend, zum Beispiel aus Blech oder einer dünnen Kunststoffplatte, ausgeführt.

Die Scheibe, wie sie vorstehend beschrieben ist, wird dazu eingesetzt, Schneidgut in einzelne Scheiben zu unterteilen. Falls es erwünscht ist, die Nahrungsmitteln zu raspeln oder in Streifen zu schneiden, kann die Scheibe zusätzlich als Träger für entsprechende Raspel- oder Schneideinsätze ausgebildet werden (Anspruch 12).
Insbesondere ein Durchbruch, der in der Scheibe ausgebildet ist, im Bereich dessen die Schneidkanten gebildet sind, kann dazu dienen, die Raspel- oder Schneideinsätze aufzunehmen und zu halten (Anspruch 13), so daß die Schneidkanten bzw. Schneidmesser der Scheibe außer Funktion gesetzt werden (Anspruch 14), und nur die Raspel- oder Schneidteile der Einsätze zur Zerkleinerung der Nahrungsmittel dienen.

Ein Ausführungsbeispiel der Erfindung ist in der Zeichnung dargestellt und wird nachfolgend näher beschrieben. In der Zeichnung zeigt:
- Fig. 1: eine perspektivische Ansicht auf die Oberseite einer Schneideinrichtung in Form einer Scheibe mit Antriebswelle,
- Fig. 2: einen Schnitt durch die Scheibe der Figur 1 parallel zur Drehachse im Bereich des Durchbruchs,
- Fig. 3: eine perspektivische Ansicht der Scheibe der Figur 1 von der Unterseite,
- Fig. 4 bis 6: verschiedene Einsätze, die in die Scheibe, wie sie in Figur 1 dargestellt ist, im Bereich des Durchbruchs einsetzbar sind.

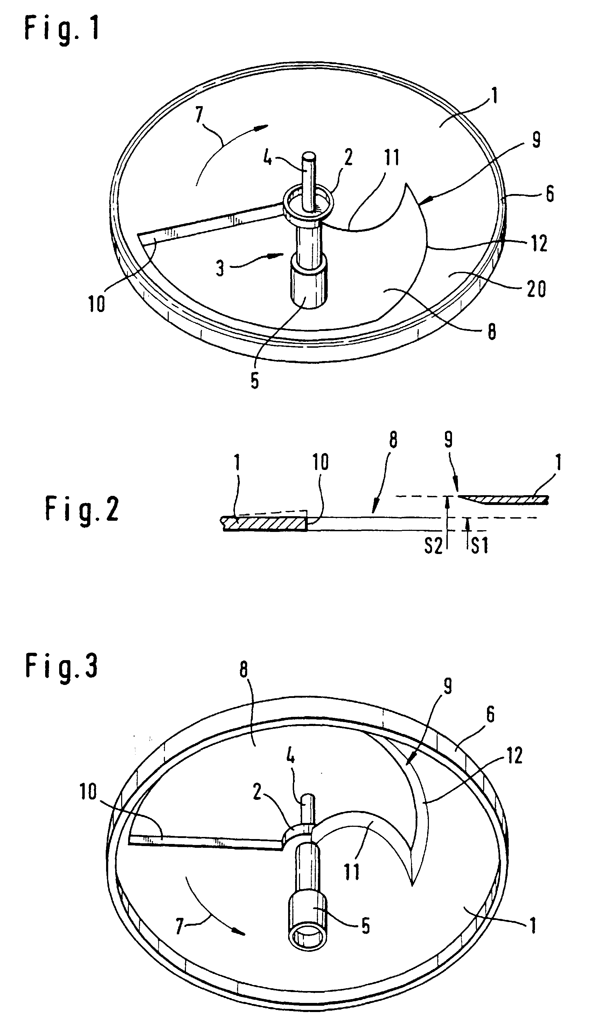

Die Schneideinrichtung, wie sie die Figuren 1 und 3 zeigen, umfaßt eine Scheibe 1, die an einem Nabenteil 2 eines Antriebswellenteils 3 gehalten ist. Das Antriebswellenteil 3 ist an seinem über die Oberseite der Scheibe 1 vorstehenden Bereich als Lagerzapfen 4 ausgebildet, während der über die Unterseite der Scheibe 1 vorstehende Teil eine Kupplungshülse 5 aufweist.

Mittels der Kupplungshülse 5 kann die Scheibe 1 mit einer Antriebswelle einer nicht dargestellten Antriebseinheit gekoppelt werden. Mittels des Lagerzapfens 4 kann die Scheibe auf der Oberseite in einer entsprechenden Aufnahme zentriert und gestützt werden.

Die Scheibe 1 ist an ihrem äußeren Rand von einem Tragring 6 umgeben, der die Scheibe 1 stabilisiert.

Über den Antrieb, der mit der Kupplungshülse 5 gekoppelt ist, wird die Scheibe in Uhrzeigerrichtung, von oben gesehen (siehe Figur 1), angetrieben, wie durch den Drehpfeil 7 in Figur 1 bzw. in Figur 3 (in der Ansicht von unten) angedeutet ist.

In der Scheibe 1 ist ein Durchbruch 8 vorhanden, dessen eine Kante, in Drehrichtung gesehen die nachlaufende Kante, als Schneidmesser 9 ausgebildet ist, während die voranführende Kante 10 eine stumpfe Stirnfläche aufweist. Das Schneidmesser ist in zwei Schneiden bzw. zwei Schneidkanten 11, 12 unterteilt. Die radial innenliegende Schneide 11 ist, in Drehrichtung (Drehpfeil 7) gesehen, konkav gekrümmt, während die andere, radial außenliegende Schneide 12, in Drehrichtung gesehen (Drehpfeil 7), konvex gekrümmt ist. Die innere oder konvexe Schneide 11 geht etwa in der Mitte zwischen dem Lagerzapfen 4 bzw. der Drehachse und dem Tragring 6 in die äußere oder konvexe Schneide 12 über.

In eine Antriebseinheit eingesetzt wird die Schneideinrichtung, wie sie in den Figuren 1 und 3 gezeigt ist, auf der Außenseite ihres Tragrings 6 durch eine nicht dargestellte Behälterwand begrenzt. Zum Zerschneiden von großen Nahrungsmittelstücken werden diese so in den Behälter eingefüllt, daß sie auf der Oberseite der Scheibe 1 aufliegen.

Unter Drehung der Scheibe 1 in Richtung des Drehpfeils 7 bewegen sich die Schneidkanten 11, 12 des Schneidmessers 9 jeweils zu dem Nahrungsmittelstück hin, das dann zwischen der inneren, konkaven Schneide 11 und der äußeren, konvexen Schneide 12 zentriert wird. Danach dringen die äußere Schneide 12 und die innere Schneide 11 von zwei Seiten in das Nahrungsmittelstück ein. Die äußere Schneide führt hierbei einen von außen nach innen gerichteten, ziehenden Schritt, vergleichbar mit einem Sichelschnitt, durch. Gleichzeitig wird durch die Schneide 11 ein Schnitt von innen in Richtung radial nach außen ausgeführt. Aufgrund der Krümmung der innenliegenden Schneide 11 wird das Schneidgut zunächst mit einem schnellen, tief in das Schneidgut eindringenden Schnitt versehen. Danach nimmt die Eindringtiefe mit einer abnehmenden Tiefe des Schnitts aufgrund der sich zu ihrem Ende hin weiter krümmenden Schneide 11 ab. Im Gegensatz dazu wird durch die äußere Schneide zunächst ein Schnitt mit einer geringen Tiefe ausgeführt, während dann, unter der weiteren Drehung der Scheibe 1, der hintere Bereich der Schneide 12 die abschließende Durchtrennung des Nahrungsmittelstücks vornimmt. Während dieses gesamten Schneidvorgangs wird das Nahrungsmittelstück zentriert zwischen der inneren Schneide 11 und der äußeren Schneide 12 gehalten. Die abgeschnittene Scheibe des Nahrungsmittelstücks fällt nach unten und der verbleibende Teil des Nahrungsmittelstücks- oder Schneidguts wird auf der Scheibe aufliegend geführt, bis er wieder in den Bereich des Durchbruchs 8 nach etwa einer weiteren, halben Umdrehung der Scheibe 1 gelangt, so daß dann die nächste Scheibe von dem Nahrungsmittelstück abgetrennt werden kann.

Aufgrund der Art der beiden Schnitte, die durch die Schneiden 10 und 11 ausgeführt werden, wobei zumindest der äußere, durch die Schneide 12 vorgenommene Schnitt als ziehender Schnitt bezeichnet werden kann, ist ein sehr ruhiger Lauf der Scheibe 1 gewährleistet mit einer geringen, erforderlichen Schneidkraft im Vergleich zu einer Schneide, die ein Nahrungsmittelstück schlagend durchtrennt. Weiterhin werden glatte Schnittflächen erzeugt, da die beiden Schneiden aufgrund ihrer Krümmung wechselweise von der radial innenliegenden Seite und der radial außenliegenden Seite mit unterschiedlichen Geschwindigkeiten eindringen und auch der letzte, noch verbleibende, zusammenhängende Abschnitt zwischen der abzutrennenden Nahrungsmittelscheibe und dem oberhalb der Scheibe 1 liegenden Nahrungsmittelstück schneidend durchtrennt und nicht abgerissen wird.

Wie anhand der Figur 2 verdeutlicht wird, die einen Schnitt durch die Scheibe 1 im Bereich des Durchbruchs 8 darstellt, kann die Dicke einer zu schneidenden Nahrungsmittelscheibe durch den Abstand zwischen der Ebene S1 und der Ebene S2 eingestellt werden, d.h. zum einen durch die Ebene S1, auf der sich derjenige Bereich der Scheibe 1 befindet, der sich an die voranführende Kante 10 anschließt, und zum anderen durch die Ebene S2, die durch das Schneidmesser 9 bzw. die beiden Schneiden 11 und 12 aufgespannt wird. Hierzu wird die Scheibe 1 flexibel ausgestaltet, so daß sie, durch geeignete Zwischenteile, unterschiedlich gespannt werden kann, um den Abstand zwischen der Ebene S1 und der Ebene S2 und damit die Dicke der Schneidgutscheibe, die von dem Schneidgut abgetrennt werden soll, einzustellen. Für diese Einstellung oder Vorspannung der Scheibe können beispielsweise oberhalb der Kupplungshülse 5 oder im Bereich des Lagerzapfens 4 ringförmige Zwischenstücke, die allerdings nicht dargestellt sind, eingefügt werden, um die Orientierung der Ebenen der Scheibe 1 zu verändern.

Ein universell einsetzbares Küchengerät zum schneidenden Zerkleinern von Nahrungsmitteln sollte nicht nur dazu geeignet sein, Nahrungsmittel in einzelne Scheiben zu zerteilen, wie dies vorstehend erläutert ist, sondern ein solches Gerät sollte auch die Möglichkeit bieten, Nahrungsmittel beispielsweise zu raspeln oder in Streifen oder Stifte zu unterteilen.

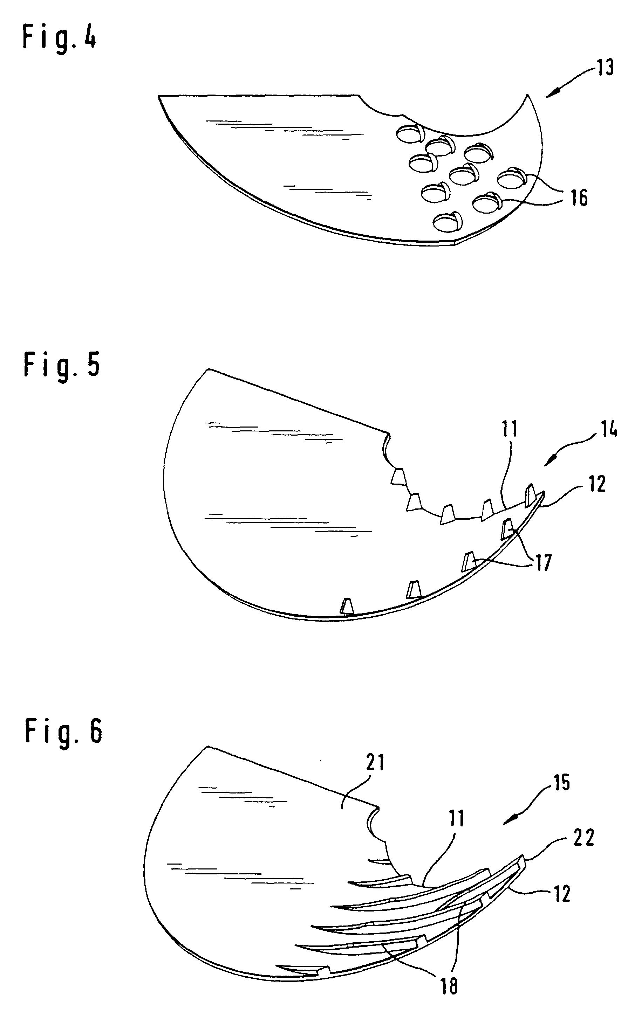

Um die Schneideinrichtung, wie sie in den Figuren 1 und 3 zu sehen ist, auch für ein Raspeln oder stiftförmiges Zerteilen von Nahrungsmitteln einzusetzen, können Einsätze 13, 14 und 15, wie sie in den Figuren 4, 5 und 6 als Beispiele gezeigt sind, in die Scheibe 1 im Bereich des Durchbruchs 8 eingesetzt werden.

Die Einsätze 13, 14 und 15 sind plattenförmige Teile mit einer Außenkontur, die der Kontur des Durchbruchs 8 entspricht. Diese Einsätze werden, je nach Art der gewünschten Bearbeitung des zu zerkleinernden Nahrungsmittels, in den Durchbruch 8 eingesetzt und dort verklemmt, wozu diese Einsätze 13, 14 und 15 geeignete Halteelemente, beispielsweise nasenartige Vorsprünge (nicht dargestellt), haben können.

Mit einem Einsatz 13, wie er in Figur 4 dargestellt ist, können aufgrund der darin ausgebildeten Raspelgümpel 16 Nahrungsmittel geraspelt werden. Schneiden sind also hier nicht vorhanden, so daß der Einsatz 13 bündig mit der Ebene 20 der Scheibe 1 abschließt.

Der Einsatz 14, der in Figur 5 gezeigt ist, besitzt von der Ebene des plattenförmigen Einsatzteils hochstehende Messer oder Schneidvorsprünge 17, die das auf der Platte aufliegende Schneidgut entsprechend vertikal anschneiden. Gleichzeitig wird in Verbindung mit diesem Schneideinsatz neben vertikalen Schnitten durch die Schneidvorsprünge 17 ein horizontaler Schnitt durch das Schneidmesser 9 mit den Schneiden 11 und 12 der Scheibe 2 ausgeführt. Die Schneidvorsprünge 17 sind in denjenigen Bereichen des Einsatzes 14 angeordnet, die in etwa den Bereichen der Schneiden 11 und 12 entsprechen bzw. an dem jeweiligen Randbereich des Einsatzes 14, der diesen Schneiden 11 und 12 zugeordnet ist. Es ergibt sich somit geschnittenes Streifengemüse.

Der Einsatz 15, wie er in Figur 6 dargestellt ist, besitzt stegförmige Schneidgutauflagen 18, die etwa radial zu der Achse bzw. den Lagerzapfen 4 umlaufend ausgerichtet sind und an dem Ende des Einsatzes 15, der wiederum den jeweiligen Schneiden 11 und 12 der Scheibe 1 zugeordnet ist, über die Ebene 21 der Einsatz-Platte 15 vorstehen, während sie an dem gegenüberliegenden Ende in die Ebene 21 der Platte 15 auslaufen. Auch dieser Einsatz 15 kommt so in dem Durchbruch 8 der Scheibe 1 zu liegen, daß seine Schneiden 11, 12 geringfügig aus der Ebene 20 der Scheibe 1 herausragen. Beim Schneiden von Gemüse wird dieses dann horizontal durch die Schneiden 11, 12 geschnitten. Die steförmigen Schneidgutauflagen 18 dienen der Führung des Gutes und der Minimierung der Reibung zwischen Gut und Schneitgutauflagen.

## Patentansprüche

1. Küchengerät zum schneidenden Zerkleinern von Nahrungsmitteln, wie Obst, Gemüse oder dergleichen, mit einem in einer Halterung angebrachten Schneidmesser (9), das zwei Schneiden (11, 12) aufweist, deren Schneidkanten im wesentlichen in einer gemeinsamen Schneidebene (S1) verlaufen und unter einem Winkel zueinander angeordnet sind, wobei das Schneidmesser (9) in einer Scheibe (1) ausgebildet ist, die um eine senkrecht zu der Schneidebene (S1) angeordnete Drehachse (4) rotiert,
**dadurch gekennzeichnet,**
daß die eine Schneide (11) des Schneidmessers (9) sich im wesentlichen von der Drehachse (4) bis zu einem bestimmten Punkt auf der Scheibe (1) erstreckt und die andere Schneide (12) sich von diesem bestimmten Punkt bis in Nähe des Randes der Scheibe (1) erstreckt, so daß die eine Schneide (11) im wesentlichen näher zu der Drehachse (4) liegt als die andere Schneide (12).

2. Küchengerät nach Anspruch 1,
**dadurch gekennzeichnet,**
daß in Drehrichtung (7) gesehen, die eine Schneidkante (11) konkav gekrümmt ist und die andere Schneidkante (12) konvex gekrümmt ist und wobei die konkave Schneidkante (11) näher zu der Drehachse (7) liegt als die konvexe Schneidkante (12).

3. Küchengerät nach Anspruch 1 oder 2,
**dadurch gekennzeichnet,**
daß die Schneidkanten (11, 12) entlang eines Durchbruchs (8) in der Scheibe (1) gebildet sind.

4. Küchengerät nach Anspruch 1,
**dadurch gekennzeichnet,**
daß die beiden Schneidkanten (11, 12) des Schneidmessers (9) aneinander anschließend eine fortlaufende Schneidkante bilden.

5. Küchengerät nach Anspruch 1,
**dadurch gekennzeichnet,**
daß unterhalb der Schneidebene (S2) eine Schneidgutauflage (S1) angeordnet ist.

6. Küchengerät nach Anspruch 5,
**dadurch gekennzeichnet,**
daß der Abstand zwischen Schneidgutauflage (S1) und Schneidgutebene (S2) veränderbar ist.

7. Küchengerät nach Anspruch 6,
**dadurch gekennzeichnet,**
daß der Abstand durch Einsatz- oder Zwischenteile veränderbar ist.

8. Küchengerät nach Anspruch 7,
**dadurch gekennzeichnet,**
daß die Einsatz- oder Zwischenteile ringförmige Teile sind, die um die Drehachse herum angeordnet sind.

9. Küchengerät nach Anspruch 1,
**dadurch gekennzeichnet,**
daß zumindest derjenige Bereich der Scheibe (1), der, in Drehrichtung (7) der Scheibe (1) gesehen, dem Schneidmesser (9) voranführt, eine Schneidgutauflage bildet.

10. Küchengerät nach Anspruch 9,
**dadurch gekennzeichnet,**
daß in Richtung der Drehachse (7) gesehen, der Abstand zwischen Schneidkanten (S2) und Schneidgutauflage (S1) durch Verbiegen oder Verwölben veränderbar ist.

11. Küchengerät nach Anspruch 10,
**dadurch gekennzeichnet,**
daß die Scheibe (1) in den unterschiedlichen Stellungen fixierbar ist.

12. Küchengerät nach einem der Ansprüche 1 bis 11,
**dadurch gekennzeichnet,**
daß die Scheibe (1) als Träger für Raspel- oder Schneideinsätze (13, 14, 15) ausgebildet ist.

13. Küchengerät nach Anspruch 3 und 12,
**dadurch gekennzeichnet**,
daß in den Durchbruch (8) die Raspel- oder Schneideinsätze (13, 14, 15) einsetzbar sind.

14. Küchengerät nach Anspruch 13,
**dadurch gekennzeichnet,**
daß die Einsätze (13) die Schneidkanten (11, 12) außer Funktion setzend verdecken.

## Claims

1. A kitchen appliance for reducing food materials such as fruit, vegetables or the like using a cutting action, with a cutting tool (9) held in a mounting structure and having two blades (11, 12) whose cutting edges extend substantially in a common cutting plane (S1) and are arranged at an angle relative to each other, said cutting tool (9) being provided in a disk (1) which rotates about a pivot (4) arranged perpendicularly to the cutting plane (S1),
**characterized in that** the one blade (11) of the cutting tool (9) extends essentially from the pivot (4) up to a specified point on the disk (1) while the other blade (12) extends from said specified point to an area in close proximity to the periphery of the disk (1), so that the one blade (11) lies substantially closer to the pivot (4) than the other blade (12).

2. The kitchen appliance as claimed in claim 1, **characterized in that,** as seen looking in the direction of rotation (7), the one blade (11) is curved in a concave fashion while the other blade (12) is curved in a convex fashion, said concave blade (11) being located in closer proximity to the pivot (7) than the convex blade (12).

3. The kitchen appliance as claimed in claim 1 or 2,
**characterized in that** said blades (11, 12) are constructed along a cutout (8) in the disk (1).

4. The kitchen appliance as claimed in claim 1,
**characterized in that** said two blades (11, 12) of the cutting tool (9), in adjoining each other, form a continuous cutting edge.

5. The kitchen appliance as claimed in claim 1,
**characterized in that** a support surface (S1) for the material being cut is arranged beneath the cutting plane (S2).

6. The kitchen appliance as claimed in claim 5,
**characterized in that** the relative distance of said support surface (S1) and said cutting plane (S2) is variable.

7. The kitchen appliance as claimed in claim 6,
**characterized in that** said relative distance is variable by means of inserts or intermediate elements.

8. The kitchen appliance as claimed in claim 7,
**characterized in that** said inserts or intermediate elements are annular elements arranged about the pivot.

9. The kitchen appliance as claimed in claim 1,
**characterized in that** at least that portion of the disk (1) which, as seen looking in the direction of rotation (7) of the disk (1), leads the cutting tool (9), forms a support surface for the material being cut.

10. The kitchen appliance as claimed in claim 9,
**characterized in that**, as seen looking in the direction of the pivot (7), the relative distance of cutting edges (S2) and support surface (S) for the material being cut is variable by bending or arching.

11. The kitchen appliance as claimed in claim 10,
**characterized in that** said disk (1) is adapted to be fixed in place in the various positions.

12. The kitchen appliance as claimed in any one of the claims 1 to 11,
**characterized in that** said disk (1) is constructed as a carrier for shredding or cutting inserts (13, 14, 15).

13. The kitchen appliance as claimed in claim 3 and 12,
**characterized in that** said shredding or cutting inserts (13, 14, 15) are insertable into the cutout (8).

14. The kitchen appliance as claimed in claim 13,
**characterized in that** said inserts (13) conceal the blades (11, 12), placing them out of operation.

## Revendications

1. Appareil de cuisine pour fragmenter par découpage des denrées alimentaires, comme par exemple des fruits, des légumes et analogues, comportant un couteau (9) monté dans un support et qui comporte deux tranchants (11,12), les arêtes de coupe s'étendent essentiellement dans un plan de coupe commun (S1) et sont disposées de manière à faire un angle l'une par rapport à l'autre, le couteau (9) étant formé sur un disque (1) qui tourne autour d'un axe de rotation (4) disposé perpendiculairement au plan de coupe (S1), caractérisé en ce qu'un tranchant (11) du couteau (9) s'étend essentiellement depuis l'axe de rotation (4) jusqu'à un point déterminé sur le disque (1), et l'autre tranchant (12) s'étend depuis ce point déterminé jusqu'à proximité du bord du disque (1), de sorte qu'un tranchant (11) est nettement plus près de l'axe de rotation (4) que l'autre tranchant (12).

2. Appareil de cuisine selon la revendication 1, caractérisé en ce que, vue dans le sens de rotation (7), une arête de coupe (11) est cintrée avec une forme concave et l'autre arête de coupe (12) est cintrée avec une forme convexe, et l'arête de coupe concave (11) est plus proche de l'axe de rotation (7) que ne l'est l'arête de coupe convexe (12).

3. Appareil de cuisine selon la revendication 1 ou 2, caractérisé en ce que les arêtes de coupe (11,12) sont formées le long d'une ouverture traversante (8) formée dans le disque (1).

4. Appareil de cuisine selon la revendication 1, caractérisé en ce que les deux arêtes de coupe (11,12) du couteau (9) forment, en se raccordant l'une à l'autre, une arête de coupe continue.

5. Appareil de cuisine selon la revendication 1, caractérisé en ce qu'un support (S1) pour la matière découpée est disposé au-dessous du plan de coupe (S2).

6. Appareil de cuisine selon la revendication 5, caractérisé en ce que la distance entre le support (S1) pour la matière découpée et le plan de coupe (S2) est variable.

7. Appareil de cuisine selon la revendication 6, caractérisé en ce que la distance peut être modifiée au moyen d'inserts ou d'éléments intercalaires.

8. Appareil de cuisine selon la revendication 7, caractérisé en ce que les inserts ou les éléments intercalaires sont des pièces de forme annulaire, qui sont disposées autour de l'axe de rotation.

9. Appareil de cuisine selon la revendication 1, caractérisé en ce qu'au moins la partie du disque (1), qui est en avant du couteau (9), lorsqu'on regarde dans le sens de rotation (7) du disque (1), forme un support pour la matière découpée.

10. Appareil de cuisine selon la revendication 9, caractérisé en ce que vue dans la direction de l'axe de rotation (7), la distance entre des arêtes de coupe (S2) et le support (SI) de la matière découpée peut être modifiée par fléchissement ou cintrage.

11. Appareil de cuisine selon la revendication 10, caractérisé en ce que le disque (1) peut être fixé dans les différentes positions.

12. Appareil de cuisine selon l'une revendications 1 à 11, caractérisé en ce que le disque (1) est agencé en tant que support pour des inserts de râpage ou de coupe (13,14,15).

13. Appareil de cuisine selon les revendications 3 et 12, caractérisé en ce que les inserts de râpage ou de coupe (13,14,15) peuvent être insérés dans l'ouverture traversante (8).

14. Appareil de cuisine selon la revendication 13, caractérisé en ce que les inserts (13) recouvrent les arêtes de coupe (11,12), en les plaçant hors service.
